# EUROPEAN PATENT APPLICATION

(11) **EP 4 703 984 A1**
(43) Date of publication of application: **04.03.2026**
(21) Application number: 25184360.3
(22) Date of filing: 23.06.2025
(51) Int. Cl.: G06Q 10/04, G06Q 10/0631, G06Q 10/0633, G06Q 10/0639, G06Q 30/0201, G06Q 50/10

(54) **METHOD AND SYSTEM TO OPTIMIZE CLOUD COST BY ANALYZING CLOUD RESOURCE USAGE**

(30) Priority: 03.09.2024 IN 202421066669
(71) Applicant: Tata Consultancy Services Limited, Maharashtra (IN)
(72) Inventor: BHOOKYA, Uday Chandra, 411006 Pune, Maharashtra (IN); JETHURI, Kunal, 411006 Pune, Maharashtra (IN); NATU, Maitreya, 411006 Pune, Maharashtra (IN); RAVURU, Sanjeeva Rayudu, 411006 Pune, Maharashtra (IN)
(74) Representative: Goddar, Heinz J.

(57) **Abstract**

Existing tools detect abnormal spends but fail to capture their systemic impact as these tools analyze resources in isolation and further fail to offer actionable recommendations. The present disclosure identifies one or more set of homogeneous resources from one or more set of resources. One or more two-dimensional clusters are created between dimensions of spend and dimensions of quantity. An effective price for each of one or more two-dimensional clusters is created and a baseline price is identified. One or more spend anomalies are identified based on comparison of associated effective prices of one or more two-dimensional clusters and identified baseline price. One or more attribute constraints are identified which when relaxed provide maximum reduction in defined baseline price to rectify identified one or more anomalies. Expands a search space to generate one or more recommendations within a new search space with relaxed one or more attribute constraints.

## Description

### CROSS-REFERENCE TO RELATED APPLICATIONS AND PRIORITY

The present application claims priority from Indian provisional application no. 202421066669, filed on September 03, 2024.

### TECHNICAL FIELD

The disclosure herein generally relates to cloud spend optimization, and, more particularly, to a method and system to optimize cloud cost by analyzing cloud resource usage.

### BACKGROUND

Cloud technologies are shaping the industries of today and future. More and more businesses are attracted to cloud due to its commitment to providing enhanced security, affordability, and ease of use. In 2023, total expenditure on public cloud system amounted to a total of $563.6 billion. This number is expected to go up to $678.8 billion in 2024, which is a 20.4% growth. It is predicted that by 2027, more than 70% of enterprises are going to use industry cloud platforms to accelerate their business initiatives, up from less than 15% in 2023.

However, cloud spend often observes unpredictability and chaos. The dynamic nature of cloud offers too many variables at play and brings too much flexibility. Cloud costs vary by usage, subscription, reservation, and so on. Additionally, there are resource specific attributes, such as instance family, platform, and tenancy options. As a result, spend anomalies manifest in different forms and are often not easy to detect. Furthermore, these cloud resources are part of a complex hierarchy of information technology (IT) infrastructure all serving various business functions. Hence, it gets difficult to assess the business impact of spend anomalies on the budget and application performance. Consequently, the business teams lack forehand control and foresight on the budget, and most businesses today keep a significant part of their budget for cloud resources.

Today, various tools are offered to analyze cloud spend and help plan the cloud spend better. However, most of these solutions fall short on various aspects. There are a set of solutions that offer statistical tools to identify the spend distribution and generate different dashboards and reports. Some more sophisticated existing tools detect abnormal spends, but these tools analyze resources in isolation and fail to capture their systemic impact. Consequently, they end up generating too many or too few anomalies and fail to offer a perspective on prioritization and budget planning. Another common limitation of existing solutions is that most of these tools stop at detecting spend leakages but fail to offer actionable recommendations.

### SUMMARY

Embodiments of the present disclosure present technological improvements as solutions to one or more of the above-mentioned technical problems recognized by the inventors in conventional systems. For example, in one embodiment, a method to optimize cloud cost by analyzing cloud resource usage is provided. The method includes identifying, via one or more hardware processors, one or more set of homogeneous resources from one or more set of resources specific to a cloud vendor, wherein the one or more set of homogeneous resources comprise one or more identical domain constraints and one or more user defined constraints, and wherein the one or more set of resources are instances of one or more cloud services created within one or more resource groups; identifying, via the one or more hardware processors, one or more spend anomalies within the identified one or more set of homogeneous resources by: (i) creating one or more two-dimensional clusters between one or more dimensions of spend and one or more dimensions of quantity using a k-means clustering for each of the one or more set of homogenous resources, wherein the quantity refers to an amount of the one or more set of resources consumed within a first timeframe, and wherein the spend refers to a total cost incurred on the one or more set of resources within a second timeframe based on the effective price and the quantity consumed; (ii) computing an effective price as a ratio of the spend over the quantity for each of the one or more two-dimensional clusters; (iii) creating a subset of one or more relevant clusters from the one or more two-dimensional clusters, wherein size of each of the one or more relevant clusters comprised in the subset is greater than a predefined minimum size threshold; (iv) identifying a baseline price as a minimum effective price for each of the one or more relevant clusters comprised in the subset; and (v) identifying the one or more spend anomalies based on a comparison of an associated effective prices of the one or more two-dimensional clusters and the identified baseline price; identifying, via the one or more hardware processors, one or more factors that cause the baseline price difference between the one or more two-dimensional clusters using one or more decision trees, and one or more Interesting Subset Discovery (ISD) methods; and iteratively perform, via the one or more hardware processors, until all of one or more attribute constraints are relaxed: identifying based on the one or more identified factors, the one or more attribute constraints which when relaxed can provide the maximum reduction in the defined baseline price to rectify the identified one or more anomalies; and expanding a search space to generate one or more recommendations within a new search space with the relaxed one or more attribute constraints.

In another aspect, there is provided a system to optimize cloud cost by analyzing cloud resource usage. The system comprises: a memory storing instructions; one or more communication interfaces; and one or more hardware processors coupled to the memory via the one or more communication interfaces, wherein the one or more hardware processors are configured by the instructions to: identify one or more set of homogeneous resources from one or more set of resources specific to a cloud vendor, wherein the one or more set of homogeneous resources comprise one or more identical domain constraints and one or more user defined constraints, and wherein the one or more set of resources are instances of one or more cloud services created within one or more resource groups. The system further includes identifying one or more spend anomalies within the identified one or more set of homogeneous resources by: (i) creating one or more two-dimensional clusters between one or more dimensions of spend and one or more dimensions of quantity using a k-means clustering for each of the one or more set of homogenous resources, wherein the quantity refers to an amount of the one or more set of resources consumed within a first timeframe, and wherein the spend refers to a total cost incurred on the one or more set of resources within a second timeframe based on the effective price and the quantity consumed; (ii) computing an effective price as a ratio of the spend over the quantity for each of the one or more two-dimensional clusters; (iii) creating a subset of one or more relevant clusters from the one or more two-dimensional clusters, wherein size of each of the one or more relevant clusters comprised in the subset is greater than a predefined minimum size threshold; (iv) identifying a baseline price as a minimum effective price for each of the one or more relevant clusters comprised in the subset; and (v) identifying the one or more spend anomalies based on a comparison of an associated effective prices of the one or more two-dimensional clusters and the identified baseline price; identifying one or more factors that cause the baseline price difference between the one or more two-dimensional clusters using one or more decision trees, and one or more Interesting Subset Discovery (ISD) methods; and iteratively perform until all of one or more attribute constraints are relaxed: identifying based on the one or more identified factors, the one or more attribute constraints which when relaxed can provide the maximum reduction in the defined baseline price to rectify the identified one or more anomalies; and expanding a search space to generate one or more recommendations within a new search space with the relaxed one or more attribute constraints.

In yet another aspect, there are provided one or more non-transitory machine-readable information storage mediums comprising one or more instructions which when executed by one or more hardware processors cause identifying one or more set of homogeneous resources from one or more set of resources specific to a cloud vendor, wherein the one or more set of homogeneous resources comprise one or more identical domain constraints and one or more user defined constraints, and wherein the one or more set of resources are instances of one or more cloud services created within one or more resource groups; identifying one or more spend anomalies within the identified one or more set of homogeneous resources by: (i) creating one or more two-dimensional clusters between one or more dimensions of spend and one or more dimensions of quantity using a k-means clustering for each of the one or more set of homogenous resources, wherein the quantity refers to an amount of the one or more set of resources consumed within a first timeframe, and wherein the spend refers to a total cost incurred on the one or more set of resources within a second timeframe based on the effective price and the quantity consumed; (ii) computing an effective price as a ratio of the spend over the quantity for each of the one or more two-dimensional clusters; (iii) creating a subset of one or more relevant clusters from the one or more two-dimensional clusters, wherein size of each of the one or more relevant clusters comprised in the subset is greater than a predefined minimum size threshold; (iv) identifying a baseline price as a minimum effective price for each of the one or more relevant clusters comprised in the subset; and (v) identifying the one or more spend anomalies based on a comparison of an associated effective prices of the one or more two-dimensional clusters and the identified baseline price; identifying one or more factors that cause the baseline price difference between the one or more two-dimensional clusters using one or more decision trees, and one or more Interesting Subset Discovery (ISD) methods; and iteratively perform until all of one or more attribute constraints are relaxed: identifying based on the one or more identified factors, the one or more attribute constraints which when relaxed can provide the maximum reduction in the defined baseline price to rectify the identified one or more anomalies; and expanding a search space to generate one or more recommendations within a new search space with the relaxed one or more attribute constraints.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary title system to optimize cloud cost by analyzing cloud resource usage, according to some embodiments of the present disclosure.
FIG. 2 is a functional block diagram of the system to optimize cloud cost by analyzing cloud resource usage, according to some embodiments of the present disclosure.
FIGS. 3A and 3B are flow diagrams illustrating the steps involved in the method to optimize cloud cost by analyzing cloud resource usage, according to some embodiments of the present disclosure
FIG. 4A shows an example of how a classification tree helps to identify a high price subset is separated from one or more low price subsets with a location attribute, according to some embodiments of the present disclosure.
FIG. 4B shows an example of a better effective price subset identification by considering an application attribute, according to some embodiments of the present disclosure.
FIG. 4C shows an example of detecting one or more high price subsets and the one or more low-price subsets using Interesting Subset Discovery (ISD) and helps to infer the factors affecting the price difference, according to some embodiments of the present disclosure.
FIG. 5 presents the search space of different combinations of attributes leading to different effective prices, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The spend leakage in a cloud estate manifests in many forms and requires a careful analysis of various metrics. To overcome the challenges of the conventional approaches in solving the problem of cloud spend optimization, embodiments herein provide a method and system to optimize cloud cost by analyzing cloud resource usage. The present disclosure identifies one or more set of homogeneous resources from one or more set of resources specific to a cloud vendor. The present disclosure further identifies one or more spend anomalies within the identified one or more set of homogeneous resources by (i) creating one or more two-dimensional clusters between one or more dimensions of spend and one or more dimensions of quantity using a k-means clustering for each of the one or more set of homogenous resources, (ii) computing an effective price as a ratio of the spend over the quantity for each of the one or more two-dimensional clusters (iii) identifying a baseline price and (iv) identifying the one or more spend anomalies based on a comparison of an associated effective prices of the one or more two-dimensional clusters and the identified baseline price. Further the present disclosure identifies one or more factors that cause the baseline price difference between the one or more two-dimensional clusters using decision trees, Interesting Subset Discovery (ISD) methods. Furthermore, the present disclosure finds one or more attribute constraints based on the one or more identified factors, which when relaxed provide the maximum reduction in the defined baseline price to rectify the identified one or more anomalies. Finally, the present disclosure expands an opportunity/search space to generate one or more recommendations within a new search space with the relaxed one or more attribute constraints.

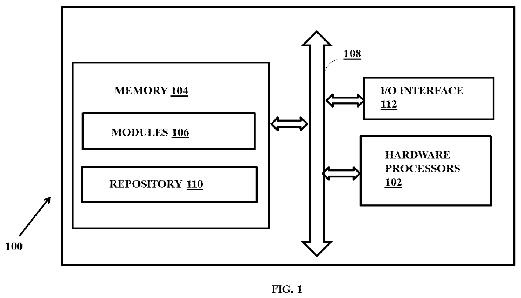

Referring now to the drawings, and more particularly to FIG. 1 through FIG. 5, where similar reference characters denote corresponding features consistently throughout the figures, there are shown preferred embodiments, and these embodiments are described in the context of the following exemplary system and/or method.

FIG. 1 illustrates an exemplary system to optimize cloud cost by analyzing cloud resource usage, according to some embodiments of the present disclosure. In an embodiment, the system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

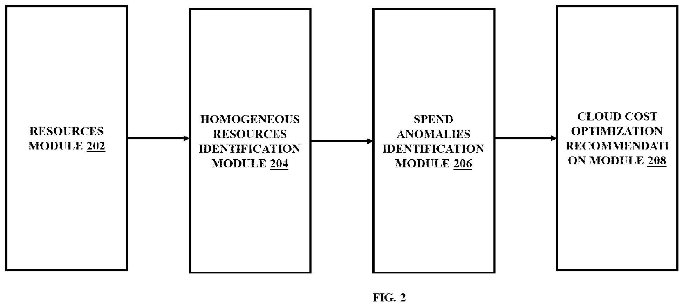

The plurality of modules 106 includes programs or coded instructions that supplement applications or functions performed by the system 100 to optimize cloud cost by analyzing cloud resource usage. The plurality of modules 106, amongst other things, can include routines, programs, objects, components, and data structures, which perform particular tasks or implement particular abstract data types. The plurality of modules 106 may also be used as signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 to optimize cloud cost by analyzing cloud resource usage. In an embodiment, the modules 106 include a resources module 202, a homogeneous resources identification module 204, a spend anomalies identification module 206 and a cloud cost optimization recommendation module 208. The modules are depicted in FIG. 2. These modules that are depicted in FIG. 2 are implemented as at least one of a logically self-contained part of a software program, a self-contained hardware component, and/or, a self-contained hardware component with a logically self-contained part of a software program embedded into each of the hardware component that when executed perform the above method described herein, in one embodiment of the present disclosure.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

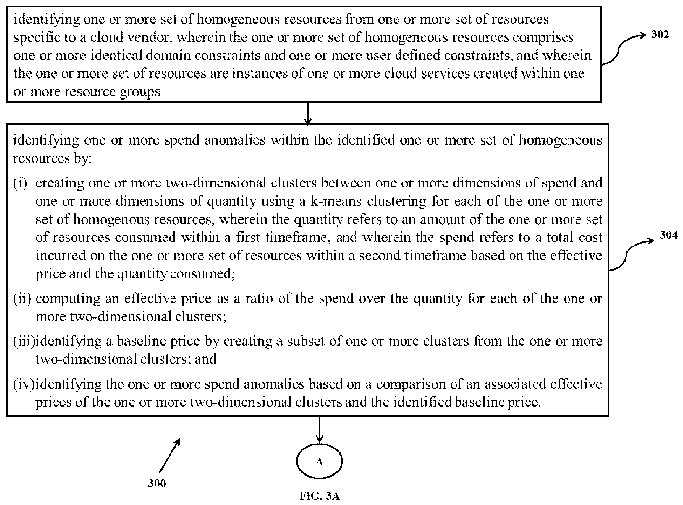

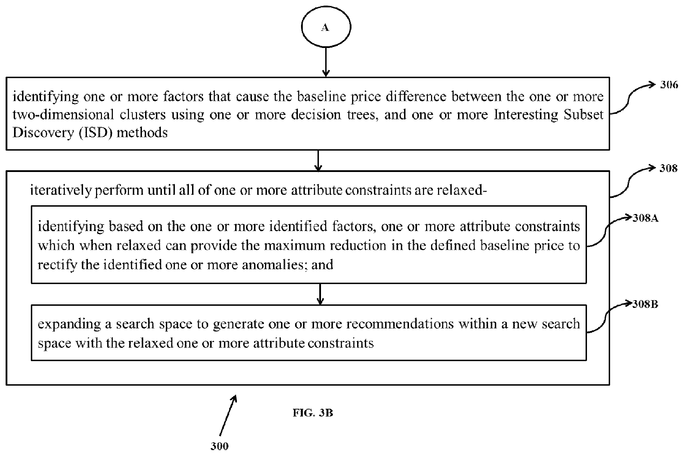

FIGS. 3A and 3B are flow diagrams illustrating a method to optimize cloud cost by analyzing cloud resource usage using the systems 100 of FIGS. 1-2, according to some embodiments of the present disclosure. Steps of the method of FIGS. 3A and 3B shall be described in conjunction with the components of FIG. 2. At step 302 of the method 300, the homogeneous resources identification module 204 executed via the one or more hardware processors 102 identifies one or more set of homogeneous resources from one or more set of resources (represented by the resources module 202) specific to a cloud vendor. The set of homogeneous resources comprises one or more identical domain constraints and one or more user defined constraints. The one or more identical domain constraints comprises at least one of a cloud provider and a resource series type. The one or more user defined constraints comprises at least one of a location, a resource group and a subscription identifier. The set of resources are instances of one or more cloud services created within one or more resource groups.

The one or more cloud resources are organized in a hierarchical structure. The hierarchy typically consists of multiple levels, each level serving a specific purpose in resource management. At the top level, there is usually an overarching entity, followed by intermediate levels that help in grouping and organizing resources effectively. Each level within the hierarchy plays a distinct role in resource allocation, billing, and management.

Management groups: Management groups enable centralized management of access, policy, and compliance across multiple cloud accounts. Conditions applied to a management group are inherited by all included accounts, ensuring consistent governance.

Subscriptions: Subscriptions associate user identities with the resources they create and impose limits on resource usage. The subscriptions help organizations or various entities manage costs and resource allocation by segmenting resources according to users, teams, and/or projects.

Resource groups: Resource groups are logical containers for deploying and managing cloud resources such as virtual machines and databases. The resource groups facilitate organized resource management, role-based access control, and policy enforcement.

Resources: Resources are instances of cloud services, such as virtual machines and storage accounts, created within resource groups. Effective resource management involves adhering to organizational policies and optimizing configurations for performance and cost.

Additionally, various domain attributes influence how resources are structured and managed, including application types, trust boundaries, environments (e.g., development, testing, production, and the like), data policies (For example: Data protection law in United States (US)) that imposes restrictions on data movement) related to customer data across regions, performance considerations, and other relevant factors (For example, performance varies by environment and production must be optimized, while development/testing can tolerate slower speeds for debugging). These domain attributes collectively determine the placement, configuration, and overall management of resources within the cloud environment. Each resource is uniquely identified by a resource identifier (ID) and resource type, defining its nature (e.g. computer, storage, networking). A meter name specifies the type of resource, while the meter sub-category indicates specific features including one or more Central Processing Unit (CPU) cores, a memory size, a storage type and a reginal availability.

Location denotes the geographic region of the resource, impacting performance and compliance. Family series groups resources by performance capabilities. Pricing models such as Reserved Instance or On-Demand offer payment flexibility. It is crucial to consider attributes directly impacting spend, as they play a vital role in cost optimization efforts. Effective price refers to the actual price paid for utilizing a particular resource, factoring in any discounts, reservations, or pricing tiers applied. Quantity refers to the amount of resource consumed within a specific timeframe. Spend refers to the total cost incurred on cloud resource within a specific timeframe, calculated by multiplying the effective price by quantity consumed. Optimization opportunities in cloud spend manifest in different forms and hence require different approaches to derive such recommendations.

Cloud providers offer a variety of options to plan cloud budget. Different factors affect the cost of a resource such as location, subscription plan, type of usage, etc. This flexibility provides more power and control to the architects and operations teams. However, if these options are not used judiciously then it also comes with a side-effect of suboptimal spend. Suboptimal spend often manifests in the form of spend anomalies. **In** the present disclosure spend anomalies are identified and generate optimization recommendations. At a conceptual level, the present disclosure looks for resources that are similar in nature and usage but are observing different costs, compare the factors affecting these costs, and generate recommendations.

**In** the present disclosure, the first step is to identify a set of homogeneous resources that are expected to have similar effective price. For instance, all virtual machines (VMs) with 4 cores, 16GB might be expected to have similar effective price. However, often enterprises impose certain constraints and preferences (For example, an enterprise may require using only specific cloud provider like Amazon Web Services (AWS) within United States (US) region for development/testing purpose) with respect to environments, location, cloud service providers, etc. These constraints limit the scope of a homogeneous set. For instance, a possible homogeneous set would be defined as all 4 core, 16GB VMs with same cloud service providers, same location, and same series name.

In the present disclosure, the set of homogeneous resources are defined, factoring in resource type and billing meter. Additionally, the captured blueprint and policies set by the user are also considered. This includes application specifics and environment types (e.g., dev, test, customer), as well as customer-centric considerations like latency. Moreover, international data policies also influence resource allocation. Leveraging association rule mining, attributes, constraints, and blueprint flexibility are considered to derive rules. For instance, in the East United States (US) with a production environment, flexibility is limited, whereas in Canada Central with a testing environment and VM resources, there's room for series flexibility, vendor change, and location restricted to intra-region. These considerations inform resource selection based on similar use cases and constraints, with ongoing refinement through enforcement patterns.

At step 304 of the method 300, the spend anomalies identification module 206 executed via the one or more hardware processors 102 identifies one or more spend anomalies within the identified one or more set of homogeneous resources which comprises the following steps. One or more two-dimensional clusters are created between one or more dimensions of spend and one or more dimensions of quantity using a k-means clustering for each of the one or more set of homogenous resources. Herein, the quantity refers to an amount of the one or more sets of resources consumed within a first timeframe. Herein the spend refers to a total cost incurred on the one or more set of resources within a second timeframe based on the effective price and the quantity consumed. An effective price is computed as a ratio of the spend over the quantity for each of the one or more two-dimensional clusters. A baseline price is identified by creating a subset of one or more clusters from the one or more two-dimensional clusters. The one or more spend anomalies are identified based on a comparison of an associated effective prices of the one or more two-dimensional clusters and the identified baseline price. Resource incurs significantly higher costs compared to other resources with identical configurations and constraints.
For example, Cost of 2 core, 4GB Random Access Memory (RAM) VM in US: 5$(Anomaly)

### Cost of 2 core, 4GB Random Access Memory (RAM) VM in India: 3$

Further, in the present disclosure the one or more homogeneous resources are analyzed to detect spend anomalies as follows:
1. For each set of homogenous resources, one or more two-dimensional clusters are created between the dimensions of spend and quantity using k-means clustering (known in the art).
2. For each of the one or more two-dimensional clusters, the effective price is computed as the ratio of spend over quantity. Thus, for each homogeneous set, a set of clusters *C*₁, ... , *Cₖ* are obtained each with different effective price *P*(*C*₁), ... , *P*(*Cₖ*)
3. A baseline price is defined by identifying the large enough least priced cluster
   a. Create relevant cluster subset C' ⊆ C such that for each *Cᵢ ∈ C'*, Size (*Cᵢ*) *>* minimum size threshold, which is usually set to 5% of the estate as per the industry best practices
   b. Baseline price *B* is defined as min *P*(*Cᵢ*) for each *Cᵢ ∈ C'*
4. The defined baseline price is used to identify anomalies by finding all clusters that have significantly higher effective price than the baseline price.
   a. Anomalous clusters *C*" ⊆ *C* such that for each *Cᵢ∈ C*", *P*(*Cᵢ*) *>> B.*
   Each such anomalous cluster presents an opportunity to optimize spend.

At step 306 of the method 300, the one or more hardware processors 102 identifies one or more factors that cause the baseline price difference between the one or more two-dimensional clusters using one or more decision trees, and one or more Interesting Subset Discovery (ISD) methods.

Comparison of anomalous clusters with normal clusters can help derive insights to understand the one or more factors that cause the spend difference and assess corrective opportunities. The present disclosure uses classification trees to identify the one or more factors. It is to be noted that the present disclosure uses a White-box approach such as decision tree instead of a Black-box solution (including support vector machines (known in the art) or neural networks (known in the art) to perform this classification, as the objective is to identify the combination of features that separate the normal clusters from anomalous ones.

At step 308 of the method 300, the one or more hardware processors 102 iterative sub steps (308A and 308B) are repeated until all of one or more attribute constraints are relaxed. The one or more attribute constraints are identified (sub step 308A of step 308), which when relaxed provide the maximum reduction in the defined baseline price to rectify the identified one or more anomalies. The one or more attribute constraints are based on the one or more identified factors. The one or more identified factors comprise a resource location, a resource series type, a charge type, and a cloud vendor. The charge type refers to a payment method including at least one of an on-demand payment method, an upfront payment method and a pay later payment method.

Further a search space is expanded (sub step 308B of step 308) to generate one or more recommendations (represented by the cloud cost optimization recommendation module 208) within a new search space with the relaxed one or more attribute constraints. It is to be noted that the effectiveness of optimization recommendations gets significantly impacted by the available search space. In the present disclosure, the one or more homogeneous resources are defined based on the preferences or restrictions in considering resources for comparison. For instance, constraints could be defined that compare only the resources comprising the attributes which includes same cloud service provider, same subscription ID, same resource type, same series name, same location, and same environment. These constraints directly impact the saving potential of the recommendations. Often it is observed that relaxing some of these attributes can significantly increase the saving potential. For instance, relaxing the constraint of location and being willing to change the location of a resource is often found to be an effective recommendation. Considering this aspect, the search space is systematically expanded beyond the user-defined constraints to show high-impact recommendations that can be generated by relaxing the least number of constraints.

The present disclosure applies the following approach to find such recommendations:
1. The constraints are considered to be defined as the set of attributes *A =* {*A*₁, *A*₂, ...,*Aₖ*}.
2. Homogenous sets are defined by each unique k-tuple (*A*₁ *= V*₁, *A*₂ *= V*₂ ,...,*Aₖ* = *Vₖ*)
3. For each such homogeneous set *S*, the baseline price *Bₛ* are computed as explained in one of the above sections.
4. Next, the attribute constraint is identified which when relaxed can provide the maximum reduction in the baseline price *Bₛ.*
5. Saving potential are generated using the one or more recommendations, within the new search space with relaxed attribute constraint.
6. Steps 4-5 are repeated to find more such recommendations.

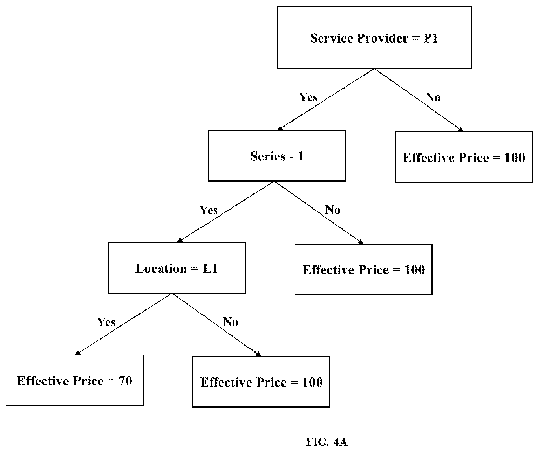

FIG. 4A shows an example of how a classification tree enables identification of a high price subset that is separated from one or more low price subsets with a location attribute, according to some embodiments of the present disclosure. One of the limitations of the traditional classification trees is that these identify only the best attribute to classify at each level of the tree and do not consider other attributes that might be almost as good in classification. Missing out on these attributes can lead to missing out insights on the factors causing the spend anomalies. Hence, the present disclosure proposes to create a classification tree that is not just selecting the best classifier but instead selecting multiple classifiers at each level.

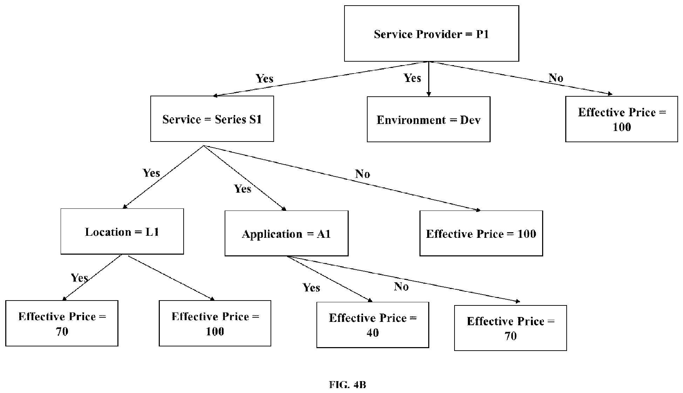

FIG. 4B shows an example of a better effective price subset identification by considering an application attribute, according to some embodiments of the present disclosure. An alternate approach to address this problem is to apply interesting subset discovery (ISD). ISD can be used to systematically explore different attributes to identify sets that have interestingly different price values. It can identify subsets with very high or very low prices. A systematic traversal in the resulting tree can help identify what properties separate a high price subset from the low-price subset and generate appropriate recommendations.

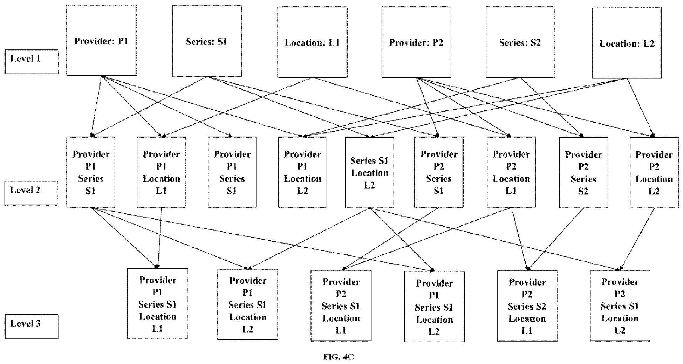

FIG. 4C shows an example of detecting one or more high price subsets and the one or more low-price subsets using Interesting Subset Discovery (ISD) and helps to infer the factors affecting the price difference, according to some embodiments of the present disclosure.

Use case example:
Step 1: In this step a homogeneous group is considered which contains 12VMs with 4 core, 16GB RAM, in which all resources expected to have similar properties. Let's consider resources with same resources as resource group, meter name, meter category, meter subcategory forms one unique homogeneous group.
Step 2: The K-means clustering technique is applied which forms four clusters on effective.
   Series A with effective price 10.72 per hour
   Series B with effective price 9.83 per hour
   Series X with effective price 22.14 per hour
   Series Y with effective price 10.72 per hour
Step 3: Deriving recommendations -
   ISD (Interesting subset discovery) method is applied to break down into subsets which is represented in the following image.
   Recommendation that are generated are on different constraints -
   The stricter constraints are kept that are imposed by user and do not allow platform, application and location within constraints. The system 100 recommends changing from series X to series Y, leading saving of INR 54K.
Step 4: Increasing the search space:
   Relaxing a few constraints to increase the search space, the system 100 allows the change location within United States (US) to change series X to series b. leading to saving of INR 71K.
   Further relaxing all constraints, a change in series and change in location to India is/can be recommended, from Series X to Series a leading to saving of INR 100K.

Case Study: A provider of SaaS-based autonomous enterprise software was incurring an annual cost of INR 27,767,441 on their cloud environment. The cloud estate comprised of 2,820 resources across 54 types, distributed across 3 countries and over 10 regions. Virtual machines and disks accounted for 90% of the total resources. The proposed solution is applied on this cloud estate to identify opportunities and generate recommendations for spend optimization.

The present disclosure implemented the system 100 and method that detected spend anomalies and recommend alternate options to optimize spend. First, findings were presented with an example of analysis of virtual machines (VMs). Initially, homogeneous groups of 12 VMs with 4 core and 16GB RAM were defined. Next, spend anomalies were identified in the defined homogeneous group. It was observed that these VMs form 2 different clusters of effective price ranges. 5 VMs observed a low effective price of INR 10.72 per hour and 7 VMs observed a high effective price of INR 22.14 per hour. Further, recommendations were derived for alternate specifications to optimize spend.

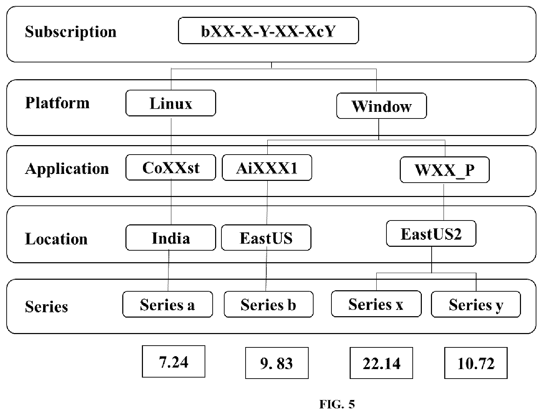

FIG. 5 presents a search space of different combinations of attributes leading to different effective price, according to some embodiments of the present disclosure. Initially stricter constraints are imposed that do not allow any change in platform, application, and location. Within these constraints, changing the VMs from Series X to Series Y is recommended, which leads to a saving of INR 54k. Further the constraints are relaxed, movement across applications is allowed, and movement outside United States (US) is prohibited. With this relaxation, a change in series and a change to another location in the US can be recommended, leading to a saving of INR 71k. Further relaxing all constraints, a change in series and a change in location to India is recommended, leading to a saving of INR 100k.

Table 1 presents the saving potential of the recommendations generated across the entire cloud estate. With strict constraints that restrict any change in platform, country, application, and environment, recommendations are generated with saving potential of INR 26,52,728. With relaxed constraints that restrict any change in platform and country, the saving potential increases to INR 41,35,328. With no constraints, the saving potential further increases to INR 54,01,075.

**Table. 1 presents the saving potential of the recommendations generated across the entire cloud estate.**

| | Number of recommendations | Saving Potential |
|---|---|---|
| Strict Constraints | 325 | 26,52, 728 |
| Basic Constraints | 464 | 41,35,328 |
| No Constraints | 473 | 54,01,075 |

Table 2 presents a comparison of the proposed approach with some of statistical approaches of analyzing top 5 and top 10 high-spend resources within a homogenous set. These approaches identify the top resources with high effective prices and recommend changing their effective price to the smallest effective price in that group. It is shown that the proposed approach of the present disclosure offers significantly higher savings than the basic heavy hitter-based solutions.

**Table 2 presents a comparison of the proposed approach with some of statistical approaches of analyzing top 5 and top 10 high-spend resources within a homogenous set**

| | Top 5 heavy hitters | Top 10 heavy hitters | Proposed Approach |
|---|---|---|---|
| Strict Constraints | 3,66,089 | 42,4867 | 26,52,728 |
| Basic Constraints | 3, 42,137 | 4,33,311 | 41,35,328 |
| No Constraints | 3, 42,137 | 4,33,311 | 54,01,075 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Existing tools detect abnormal spends but fail to capture their systemic impact as these tools analyze resources in isolation and further fail to offer actionable recommendations. The embodiment thus provides a method and system to optimize cloud cost by analyzing cloud resource usage and recommend alternate specifications to optimize spend.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:
identifying (302), via one or more hardware processors, one or more set of homogeneous resources from one or more set of resources specific to a cloud vendor, wherein the one or more set of homogeneous resources comprise one or more identical domain constraints and one or more user defined constraints, and wherein the one or more set of resources are instances of one or more cloud services created within one or more resource groups;
identifying (304), via the one or more hardware processors, one or more spend anomalies within the identified one or more set of homogeneous resources by:
(i) creating one or more two-dimensional clusters between one or more dimensions of spend and one or more dimensions of quantity using a k-means clustering for each of the one or more set of homogenous resources, wherein the quantity refers to an amount of the one or more set of resources consumed within a first timeframe, and wherein the spend refers to a total cost incurred on the one or more set of resources within a second timeframe based on the effective price and the quantity consumed;
(ii) computing an effective price as a ratio of the spend over the quantity for each of the one or more two-dimensional clusters;
(iii) creating a subset of one or more relevant clusters from the one or more two-dimensional clusters, wherein size of each of the one or more relevant clusters comprised in the subset is greater than a predefined minimum size threshold;
(iv) identifying a baseline price as a minimum effective price for each of the one or more relevant clusters comprised in the subset; and
(v) identifying the one or more spend anomalies based on a comparison of an associated effective prices of the one or more two-dimensional clusters and the identified baseline price;
identifying (306), via the one or more hardware processors, one or more factors that cause the baseline price difference between the one or more two-dimensional clusters using one or more decision trees, and one or more Interesting Subset Discovery (ISD) methods; and
iteratively perform (308), via the one or more hardware processors, until all of one or more attribute constraints are relaxed:
identifying (308A) based on the one or more identified factors, the one or more attribute constraints which when relaxed can provide the maximum reduction in the defined baseline price to rectify the identified one or more anomalies; and
expanding (308B) a search space to generate one or more recommendations within a new search space with the relaxed one or more attribute constraints.

2. The processor implemented method (300) as claimed in claim 1, wherein the one or more identical domain constraints comprises at least one of a cloud provider and a resource series type, and wherein the one or more user defined constraints comprises at least one of a location, a resource group and a subscription identifier.

3. The processor implemented method (300) as claimed in claim 1, wherein the one or more cloud services comprises one or more virtual machines and one or more storage accounts.

4. The processor implemented method (300) as claimed in claim 1, wherein the one or more resource groups are one or more logical containers for deploying and managing the one or more set of resources, and wherein the one or more resource groups facilitate an organized resource management, a role-based access control, and a policy enforcement.

5. The processor implemented method (300) as claimed in claim 1, wherein the one or more identified factors comprise a resource location, a resource series type, a charge type, and a cloud vendor.

6. The processor implemented method (300) as claimed in claim 5, wherein the charge type refers to a payment method including at least one of an on-demand payment method, an upfront payment method and a pay later payment method.

7. A system (100), comprising:
a memory (104) storing instructions;
one or more communication interfaces (112); and
one or more hardware processors (102) coupled to the memory (104) via the one or more communication interfaces (112), wherein the one or more hardware processors (102) are configured by the instructions to:
identify one or more set of homogeneous resources from one or more set of resources specific to a cloud vendor, wherein the one or more set of homogeneous resources comprises one or more identical domain constraints and one or more user defined constraints, and wherein the one or more set of resources are instances of one or more cloud services created within one or more resource groups;
identify one or more spend anomalies within the identified one or more set of homogeneous resources by:
(i) creating one or more two-dimensional clusters between one or more dimensions of spend and one or more dimensions of quantity using a k-means clustering for each of the one or more set of homogenous resources, wherein the quantity refers to an amount of the one or more set of resources consumed within a first timeframe, and wherein the spend refers to a total cost incurred on the one or more set of resources within a second timeframe based on the effective price and the quantity consumed;
(ii) computing an effective price as a ratio of the spend over the quantity for each of the one or more two-dimensional clusters;
(iii) creating a subset of one or more relevant clusters from the one or more two-dimensional clusters, wherein size of each of the one or more relevant clusters comprised in the subset is greater than a predefined minimum size threshold;
(iv) identifying a baseline price as a minimum effective price for each of the one or more relevant clusters comprised in the subset; and
(v) identifying the one or more spend anomalies based on a comparison of an associated effective prices of the one or more two-dimensional clusters and the identified baseline price;
identify one or more factors that cause the baseline price difference between the one or more two-dimensional clusters using one or more decision trees, and one or more Interesting Subset Discovery (ISD) methods; and iteratively perform until all of one or more attribute constraints are relaxed:
identifying based on the one or more identified factors, the one or more attribute constraints which when relaxed can provide the maximum reduction in the defined baseline price to rectify the identified one or more anomalies; and
expanding a search space to generate one or more recommendations within a new search space with the relaxed one or more attribute constraints.

8. The system (100) as claimed in claim 7, wherein the one or more identical domain constraints comprises at least one of a cloud provider and a resource series type, and wherein the one or more user defined constraints comprises at least one of a location, a resource group and a subscription identifier.

9. The system (100) as claimed in claim 7, wherein the one or more cloud services comprises one or more virtual machines and one or more storage accounts.

10. The system (100) as claimed in claim 7, wherein the one or more resource groups are one or more logical containers for deploying and managing the one or more set of resources, and wherein the one or more resource groups facilitate an organized resource management, a role-based access control, and a policy enforcement.

11. The system (100) as claimed in claim 7, wherein the one or more identified factors comprise a resource location, a resource series type, a charge type, and a cloud vendor.

12. The system (100) as claimed in claim 11, wherein the charge type refers to a payment method including at least one of an on-demand payment method, an upfront payment method and a pay later payment method.

13. One or more non-transitory machine-readable information storage mediums comprising one or more instructions which when executed by one or more hardware processors cause:
identifying one or more set of homogeneous resources from one or more set of resources specific to a cloud vendor, wherein the one or more set of homogeneous resources comprise one or more identical domain constraints and one or more user defined constraints, and wherein the one or more set of resources are instances of one or more cloud services created within one or more resource groups;
identifying one or more spend anomalies within the identified one or more set of homogeneous resources by:
(i) creating one or more two-dimensional clusters between one or more dimensions of spend and one or more dimensions of quantity using a k-means clustering for each of the one or more set of homogenous resources, wherein the quantity refers to an amount of the one or more set of resources consumed within a first timeframe, and wherein the spend refers to a total cost incurred on the one or more set of resources within a second timeframe based on the effective price and the quantity consumed;
(ii) computing an effective price as a ratio of the spend over the quantity for each of the one or more two-dimensional clusters;
(iii) creating a subset of one or more relevant clusters from the one or more two-dimensional clusters, wherein size of each of the one or more relevant clusters comprised in the subset is greater than a predefined minimum size threshold;
(iv) identifying a baseline price as a minimum effective price for each of the one or more relevant clusters comprised in the subset; and
(v) identifying the one or more spend anomalies based on a comparison of an associated effective prices of the one or more two-dimensional clusters and the identified baseline price;
identifying one or more factors that cause the baseline price difference between the one or more two-dimensional clusters using one or more decision trees, and one or more Interesting Subset Discovery (ISD) methods; and
iteratively perform until all of one or more attribute constraints are relaxed:
identifying based on the one or more identified factors, the one or more attribute constraints which when relaxed can provide the maximum reduction in the defined baseline price to rectify the identified one or more anomalies; and
expanding a search space to generate one or more recommendations within a new search space with the relaxed one or more attribute constraints.

14. The one or more non-transitory machine readable information storage mediums as claimed in claim 13, wherein the one or more identical domain constraints comprises at least one of a cloud provider and a resource series type, and wherein the one or more user defined constraints comprises at least one of a location, a resource group and a subscription identifier.

15. The one or more non-transitory machine readable information storage mediums as claimed in claim 13, wherein the one or more cloud services comprise one or more virtual machines and one or more storage accounts.
